(19) Europäisches Patentamt
European Patent Office
Office européen des brevets

(11) Veröffentlichungsnummer : 0 316 024 B1

# (12) EUROPÄISCHE PATENTSCHRIFT

(45) Veröffentlichungstag der Patentschrift : **07.08.91 Patentblatt 91/32**

(51) Int. Cl.$^5$ : **A01N 43/653**

(21) Anmeldenummer : **88121652.7**

(22) Anmeldetag : **04.09.84**

## (54) Fungizide Mittel.

Die Akte enthält technische Angaben, die nach dem Eingang der Anmeldung eingereicht wurden und die nicht in dieser Patentschrift enthalten sind.

(30) Priorität : **16.09.83 DE 3333412**

(43) Veröffentlichungstag der Anmeldung : **17.05.89 Patentblatt 89/20**

(45) Bekanntmachung des Hinweises auf die Patenterteilung : **07.08.91 Patentblatt 91/32**

(84) Benannte Vertragsstaaten : **BE CH DE FR GB IT LI NL**

(56) Entgegenhaltungen :
**EP-A- 0 110 048**
**FR-A- 2 516 350**

(60) Veröffentlichungsnummer der früheren Anmeldung nach Art. 76 EPÜ : **0 135 855**

(73) Patentinhaber : **BAYER AG**
**W-5090 Leverkusen 1 Bayerwerk (DE)**

(72) Erfinder : **Brandes, Wilhelm, Dr.**
**Eichendorffstrasse 3**
**W-5663 Leichlingen (DE)**
Erfinder : **Hänssler, Gerd, Dr.**
**Am Arenzberg 58a**
**W-5090 Leverkusen 3 (DE)**
Erfinder : **Reinecke, Paul, Dr.**
**Steinstrasse 8**
**W-5090 Leverkusen 3 (DE)**
Erfinder : **Scheinpflug, Hans, Dr.**
**Am Thelenhof 15**
**W-5090 Leverkusen 1 (DE)**
Erfinder : **Holmwood, Graham, Dr.**
**Krutscheider Weg 105**
**W-5600 Wuppertal 11 (DE)**

EP 0 316 024 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue fungizide Wirkstoffkombinationen aus einem bekannten, substituierten 1-Hydroxyethyl-triazolyl-Derivat und anderen bekannten fungiziden Wirkstoffen.

Es ist bereits allgemein bekannt, daß Mischungen enthaltend 1,2,4-Triazol-Derivate, wie z.B. das 1-(4-Chlorphenoxy)-3,3-dimethyl-1-(1,2,4-triazol-1-yl)-2-butanon, in Kombination mit anderen bekannten Fungiziden eine beachtlich hohere Wirkung als die Einzelkomponenten aufweisen (vgl. z.B. die Deutsche Offenlegungsschrift 25 52 967. Die Wirksamkeit dieser Wirkstoffmischungen ist jedoch nicht auf allen Anwendungsgebieten voll befriedigend.

Es wurde gefunden, daß neue Wirkstoffkombinationen aus

— dem substituierten 1-Hydroxyethyl-triazolyl-Derivat der Formel

(I) 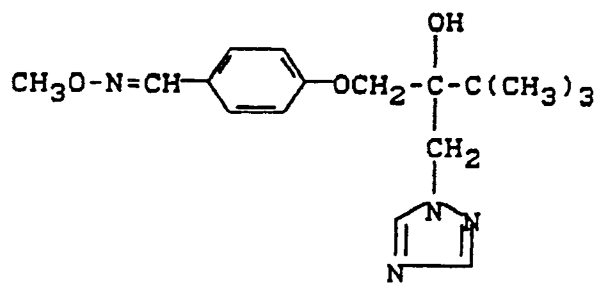

und

A) einem aromatischen Carbonsäure-Derivat der Formel

(II) 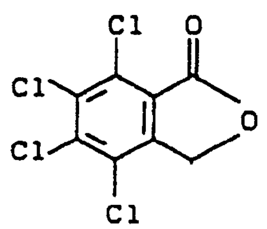

(TETRACHLORPHTHALID)

und/oder

B) Dithiocarbamaten der Formeln

(III) 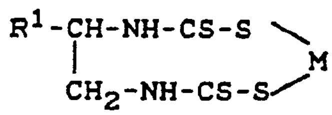

(IIIa) $R^1$ = H, M = Zn (ZINEB)

(IIIb) $R^1$ = H, M = Mn (MANEB)

(IIIc) Mischung aus (IIIa) und (IIIb) (MANCOZEB)

(IIId) $R^1$ = $CH_3$, M = Zn (PROPINEB)

und/oder

C) Benzimidazol-Derivaten der Formeln

(IVa) 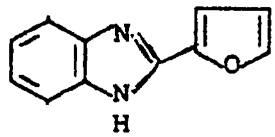 (FUBERIDAZOL)

(IVb) 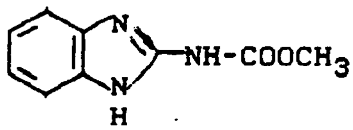 (CARBENDAZIM)

D) einem Harnstoff-Derivat der Formel

(V) 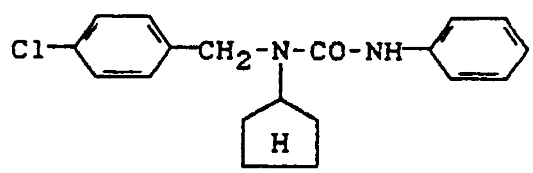 (PENCYCURON)

und/oder
E) einem Triazin-Derivat der Formel

(VI) 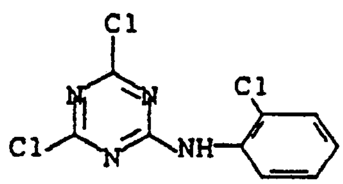 (ANILAZIN)

und/oder
F) einem Chinoxalin-Derivat der Formel

(VII) 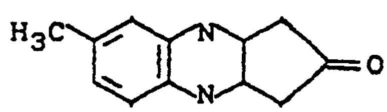 (CHINOMETHIONAT)

und/oder
G) einem Dicarboximid-Derivat der Formel

(VIIIa) 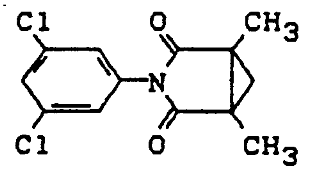 (PROCYMIDONE)

(VIIIb) 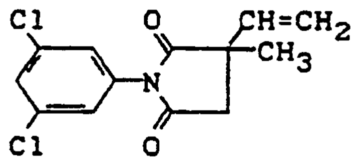 (VINCHLOZOLIN)

(VIIIc) 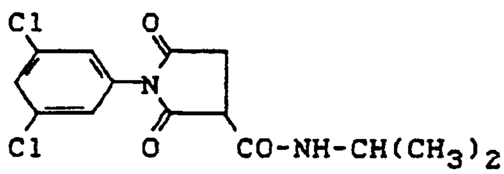 (IPRODIONE)

eine besonders hohe fungizide Wirksamkeit aufweisen.

Überraschenderweise ist die fungizide Wirkung der erfindungsgemäßen Wirkstoffkombination wesentlich höher als die Wirkung der Einzelkomponenten und gegebenenfalls auch als die Summe der Einzelkomponenten (synergistischer Effekt). Die Auffindung dieser Kombinationen aus der speziellen Verbindung der Formel (I) und den Wirkstoffen der oben angegebenen Gruppen (A), (B), (C), (D), (E), (F) und (G) stellt somit eine wertvolle Bereicherung der Technik dar.

Das für die erfindungsgemäße Kombination speziell zu verwendende substituierte 1-Hydroxyethyl-triazolyl-Derivat ist durch die obige Formel (I) eindeutig definiert. Die Verbindung ist bekannt aus der DE-A 3237400.

Die als Mischungskomponenten zu verwendenden Verbindungen der oben aufgeführten Gruppen (A), (B), (C), (D), (E), (F) und (G) sind in der Literatur bereits beschrieben ; vgl. hierzu folgende Angaben :

(A) : K.H. Büchel, "Pflanzenschutz und Schädlingsbekämpfung", Seite 146, Georg Thieme Verlag, Stuttgart, 1977,
(B) : R. Wegler, "Chemie der Pflanzenschutz- und Schädlingsbekämpfungsmittel", Band 2, Seiten 65 und 66, Springer Verlag, Berlin/Heidelberg/New York, 1970,
(C) : DE-AS 1209799, DE-OS 1932297, US-PS 3010968 ;
(D) : DE-OS 2732257 ;
(E) : R. Wegler, loc. cit., Seite 120 ;
(F) : R. Wegler, loc. cit., Seite 128 und
(G) : K.H. Büchel, loc. cit., Seite 148.

Bevorzugt sind Wirkstoffkombinationen aus dem substituierten 1-Hydroxyethyl-triazolyl-Derivat der Formel (I) und einem Wirkstoff der Formel (II) und/oder einem Wirkstoff der Formeln (IIIa), (IIIb), (IIIc) oder (IIId) und/oder einem Wirkstoff der Formel (V).

Die Gewichtsverhältnisse der Wirkstoffgruppen in den Wirkstoffkombinationen können in relativ großen Bereichen schwanken. Im allgemeinen entfallen auf 1 Gew.-Teil an Verbindung der Formel (I) 0,01 bis 500 Gew.-Teile Wirkstoffklassen (A) bis (G), vorzugsweise 0,02 bis 200 Gew.-Teile aus den Letzteren, besonders bevorzugt 0,1 bis 50 Gew.-Teile.

Die erfindungsgemäßen Wirkstoffkombinationen weisen eine starke mikrobizide Wirkung auf und können zur Bekämpfung von unerwünschten Mikroorganismen praktisch eingesetzt werden ; sie sind für den Gebrauch als Pflanzenschutzmittel geeignet.

Fungizide Mittel im Pflanzenschutz werden eingesetzt zur Bekämpfung von Plasmadiophoromycetes, Oomycetes, Chytridiomycetes, Zygomycetes, Ascomycetes, Basidiomycetes, Deuteromycetes.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut und des Bodens.

Die erfindungsgemäßen Wirkstoffkombinationen haben ein sehr breites Wirkungsspektrum und können

angewandt werden gegen parasitäre Pilze, die oberirdische Pflanzenteile befallen oder die Pflanzen vom Boden her angreifen, sowie samenübertragbare Krankheitserreger. Besonders praktische Bedeutung haben solche Wirkstoffkombinationen als Saatgutbeizmittel gegen phytopathogene Pilze, die mit dem Saatgut übertragen werden oder im Boden vorkommen und von dort die Kulturpflanzen befallen. Dabei handelt es sich um Keimlingskrankheiten, Wurzelfäulen, Stengel-, Halm-, Blatt-, Blüten-, Frucht- und Samenkrankheiten, die insbesondere durch Tilletia- Urocycstis-, Ustilago-, Septoria-, Typhula-, Rynchosporium-, Helminthosporium- und Fusarium-Arten hervorgerufen werden. Durch die systemische Wirkung des einen Mischungspartners werden die Pflanzen auch oft längere Zeit nach der Beizung noch vor Krankheitserregern geschützt, die verschiedene Teile des Sprosses angreifen können, z.B. echte Mehltaupilze und Rostpilze. Die Wirkstoffkombinationen können daneben auch als Bodenbehandlungsmittel gegen phytopathogene Pilze eingesetzt werden und wirken gegen Wurzelfäulen und Tracheomykosen, die z.B. durch Krankheitserreger der Gattungen Pythium, Verticillium, Phialophora, Rhizoctonia, Fusarium und Thielaviopsis verursacht werden.

Die erfindungsgemäßen Wirkstoffkombinationen zeigen aber auch hervorragende Wirkung bei direkter Applikation auf die oberirdischen Pflanzenteile gegen Krankheitserreger auf verschiedenen Kulturpflanzen, wie echte Mehltaupilze (Erysiphe-, Uncinula-, Sphaerotheca-, Podosphaera-Arten, Leveillula taurica), Rostpilze, Venturia-Arten, Cercospora-Arten, Alternaria-Arten, Botrytis-Arten, Phytophthora-Arten, Peronospora-Arten, Fusarium-Arten, Pyrenophora-Arten, Cochliobolus-Arten, Septoria-Arten, Pseudocercosporella herpotrichoides, Pyricularia oryzae, Pellicularia sasakii.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden.

Als flüssige Lösungsmittel kommen im wesentlichen in Frage : Aromaten wie Xylol, Toluol oder Alkylnaphthaline, chlorierte Aromaten oder chlorierte aliphatische Kohlenwasserstoffe wie Chlorbenzole, Chlorethylene oder Methylenchlorid, aliphatische Kohlenwasserstoffe wie Cyclohexan oder Paraffine, z.B. Erdölfraktionen, Alkohole wie Butanol oder Glycol sowie deren Ether und Ester, Ketone wie Aceton, Methylethylketon, Methylisobutylketon oder Cyclohexanon, stark polare Lösungsmittel wie Dimethylformamid und Dimethylsulfoxid sowie Wasser ; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas wie Halogenkohlenwasserstoffe sowie Butan, Propan, Stickstoff und Kohlendioxid ; als feste Trägerstoffe kommen in Frage : z.B. natürliche Gesteinsmehle wie Kaoline, Tonerden, Talkum, Kreide, Quarz, Attapulgit, Montmorillonit oder Diatomeenerde und synthetische Gesteinsmehle wie hochdisperse Kieselsäure, Aluminiumoxid und Silikate ; als feste Trägerstoffe für Granulate kommen in Frage : z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel ; als Emulgier- und/oder schaumerzeugende Mittel kommen in Frage : z.B. nichtionogene und anionische Emulgatoren wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate ; als Dispergiermittel kommen in Frage : z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden wie Gummiarabicum, Polyvinylalkohol, Polyvinylacetat sowie natürliche Phospholipide wie Kephaline und Lecithine und synthetische Phospholipide. Weitere Additive können mineralische und vegetatible Öle sein.

Es können Farbstoffe wie anorganische Pigmente, z.B. Eisenoxid, Titanoxid, Ferrocyanblau und organische Farbstoffe wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemäßen Wirkstoffe können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffe können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden.

Die Anwendung geschieht in üblicher Weise, z.B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew-%, vorzugsweise zwischen 0,5 und 0,001%.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew-%, am Wirkungsort erforderlich.

Zur Erläuterung dienen die nachfolgenden Anwendungsbeispiele.

Beispiel A

Erysiphe-Test (Gerste)/protektiv

| | |
|---|---|
| Lösungsmittel : | 100 Gewichtsteile Dimethylformamid |
| Emulgator : | 0,25 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit Sporen von Erysiphe graminis f.sp. hordei bestäubt.

Die Pflanzen werden in einem Gewächshaus bei einer Temperatur von ca. 20°C und einer relativen Luftfeuchtigkeit von ca. 80% aufgestellt, um die Entwicklung von Mehltaupusteln zu begünstigen.

7 Tage nach der Inokulation erfolgt die Auswertung.

Um Synergismus zwischen den in diesem Versuch verwendeten Wirkstoffen aufzuzeigen, wurden die Resultate nach der von R.S. Colby beschriebenen Methode (Calculating Synergistic and Antagonistic Responses of Herbicide Combinations ; Weeds 15, 20-22, 1967) ausgewertet. Der erwartete Befall in % der unbehandelten Kontrolle wurde gemäß der Gleichung

$$E = \frac{X \cdot Y}{100}$$

berechnet. Dabei bedeuten X bzw. Y den Krankheitsbefall, ausgedrückt in % der unbehandelten Kontrolle, den die beiden Präparate bei einer getrennten Anwendung zulassen. Ein synergistischer Effekt liegt dann vor, wenn die fungizide Wirkung der Wirkstoffkombination größer ist als die der einzeln applizierten Wirkstoffe. In diesem Fall muß der tatsächlich beobachtete Befall geringer sein als der aus der oben angeführten Formel errechnete Wert für den erwarteten Befall (E).

**Tabelle A**

Erysiphe-Test (Gerste) / protektiv

| Wirkstoff | Wirkstoffkonzentration in der Spritzbrühe in Gew.-% | Krankheitsbefall in % der unbehandelten Kontrolle | |
|---|---|---|---|
| (I) (bekannt) | 0,00025 | 100 | |
| (IIId) (bekannt) (PROPINEB) | 0,025 | 51,9 | |
| | | **beobachteter** Befall nach Anwendung der Mischung in % der unbehandelten Kontrolle | **erwarteter** Befall (E) nach Anwendung der Mischung in % der unbehandelten Kontrolle |
| Mischung aus (I) und (IIId) | 0,0025 + 0,025 | 16,2 | 51,9 |

(Mischungsverhältnis 1 : 100)

Beispiel B

Leptosphaeria nodorum-Test (Weizen)/protektiv

Lösungsmittel : 100 Gewichtsteile Dimethylformamid
Emulgator : 0,25 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit einer Konidiensuspension von Leptosphaeria nodorum besprüht. Die Pflanzen verbleiben 48 Stunden bei 20°C und 100% relativer Luftfeuchtigkeit in einer Inkubationskabine.

Die Pflanzen werden in einem Gewächshaus bei einer Temperatur von ca. 15°C und einer relativen Luftfeuchtigkeit von ca. 80% aufgestellt.

10 Tage nach der Inokulation erfolgt die Auswertung.

Um Synergismus zwischen den in diesem Versuch verwendeten Wirkstoffen aufzuzeigen, wurden die Resultate nach der von R.S. Colby beschriebenen Methode (Calculating Synergistic and Antagonistic Responses of Herbicide Combinations ; Weeds 15, 20-22, 1967) ausgewertet. Der erwartete Befall in % der unbehandelten Kontrolle wurde gemäß der Gleichung

$$E = \frac{X \cdot Y}{100}$$

berechnet. Dabei bedeuten X bzw. Y den Krankheitsbefall, ausgedrückt in % der unbehandelten Kontrolle, den die beiden Präparate bei einer getrennten Anwendung zulassen. Ein synergistischer Effekt liegt dann vor, wenn die fungizide Wirkung der Wirkstoffkombination großer ist als die der einzeln applizierten Wirkstoffe. In diesem Fall muß der tatsächlich beobachtete Befall geringer sein als der aus der oben angeführten Formel errechnete Wert für den erwarteten Befall (E).

Tabelle B

Leptosphaeria nodorum-Test (Weizen) / protektiv

| Wirkstoff | Wirkstoffkonzentration in der Spritzbrühe in Gew.-% | Krankheitsbefall in % der unbehandelten Kontrolle | |
|---|---|---|---|
| (I) (bekannt) | 0,01 | 50,0 | |
| (VI) (bekannt) (ANILAZIN) | 0,005 | 64,8 | |
| | | beobachteter Befall nach Anwendung der Mischung in % der unbehandelten Kontrolle | erwarteter Befall (E) nach Anwendung der Mischung in % der unbehandelten Kontrolle |
| Mischung aus (I) und (VI) | 0,01 + 0,005 | 25,0 | 32,4 |

(Mischungsverhältnis 2 : 1)

**Patentansprüche**

1. Fungizides Mittel, gekennzeichnet durch einen Gehalt an einer Wirkstoffkombination aus
— dem substituierten 1-Hydroxyethyl-triazolyl-Derivat der Formel

(I) 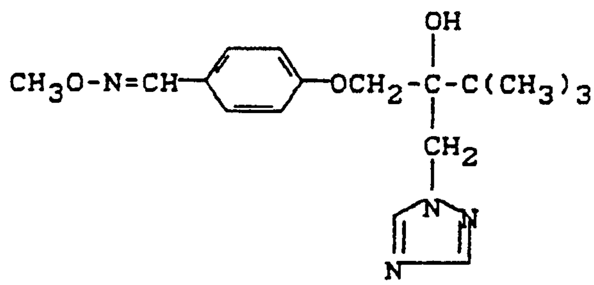

und

A) einem aromatischen Carbonsäure-Derivat der Formel

(II) 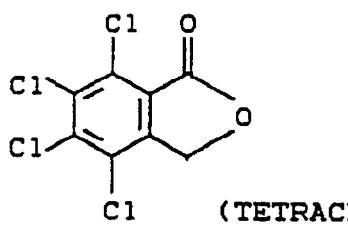 (TETRACHLORPHTHALID)

und/oder

B) Dithiocarbamaten der Formeln

(III) 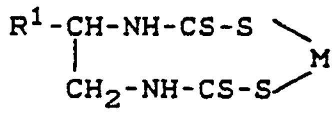

(IIIa) $R^1$ = H, M = Zn (ZINEB)

(IIIb) $R^1$ = H, M = Mn (MANEB)

(IIIc) Mischung aus (IIIa) und (IIIb) (MANCOZEB)

(IIId) $R^1$ = $CH_3$, M = Zn (PROPINEB)

und/oder

C) Benzimidazol-Derivaten der Formeln

(IVa) 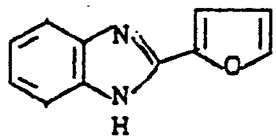 (FUBERIDAZOL)

(IVb) 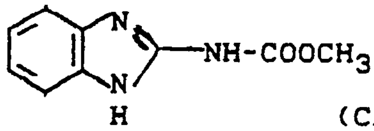 (CARBENDAZIM)

D) einem Harnstoff-Derivat der Formel

(V) 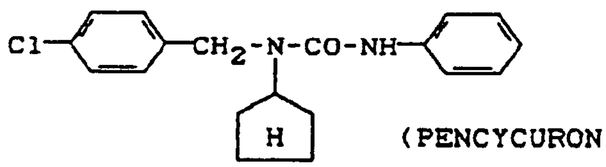 (PENCYCURON)

und/oder

E) einem Triazin-Derivat der Formel

(VI) 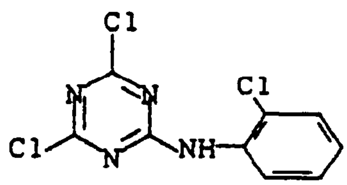 (ANILAZIN)

und/oder

F) einem Chinoxalin-Derivat der Formel

(VII) 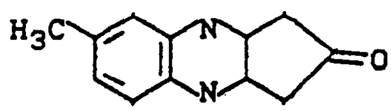 (CHINOMETHIONAT)

und/oder

G) einem Dicarboximid-Derivat der Formeln

(VIIIa) 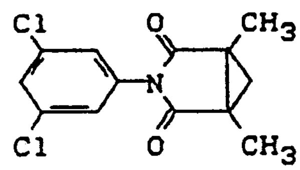 (PROCYMIDONE)

(VIIIb) 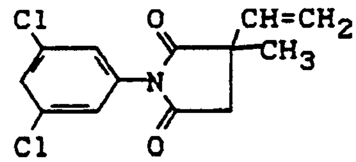 (VINCHLOZOLIN)

(VIIIc) 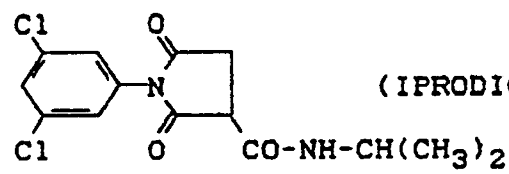 (IPRODIONE)

wobei in der Wirkstoffkombination das Gewichtsverhältnis von substituiertem 1-Hydroxyethyl-triazolyl-Derivat der Formel (I) zu einem Wirkstoff aus den Gruppen (A) bis (G) zwischen 1 : 0,1 und 1 : 500 liegt.

2. Fungizides Mittel gemäß Anspruch 1, dadurch gekennzeichnet, daß das Gewichtsverhältnis zwischen 1 : 0,2 und 1 : 200 liegt.

3. Fungizides Mittel gemäß Anspruch 1, dadurch gekennzeichnet, daß das Gewichtsverhältnis zwischen 1 : 0,5 und 1 : 50 liegt.

4. Verfahren zur Bekämpfung von Pilzen, dadurch gekennzeichnet, daß man eine Wirkstoffkombination gemäß Anspruch 1 auf Pilze oder deren Lebensraum einwirken läßt.

5. Verwendung von Wirkstoffkombinationen gemäß Anspruch 1 zur Bekämpfung von Pilzen.

6. Verfahren zur Herstellung von fungiziden Mitteln, dadurch gekennzeichnet, daß man eine Wirkstoffkombination gemäß Anspruch 1 mit Streckmitteln und/oder oberflächenaktiven Mitteln vermischt.

## Claims

1. Fungicidal agent, characterised in that it contains an active compound combination of

— the substituted 1-hydroxyethyl-triazolyl derivative of the formula

(I) 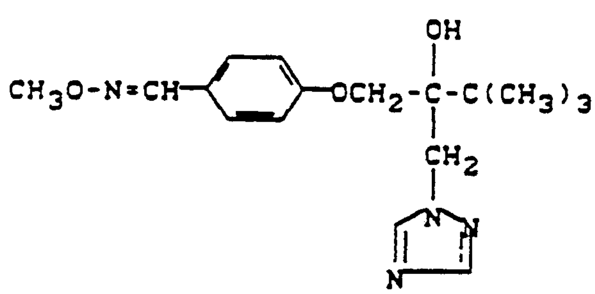

and

A) an aromatic carboxylic acid derivative of the formula

(II) 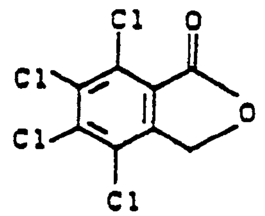 (TETRACHLOROPHTHALIDE)

and/or
B) dithiocarbamates of the formulae

(III) 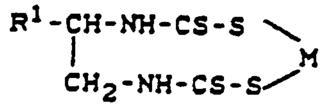

(IIIa) $R^1 = H$, $M = Zn$ (ZINEB)

(IIIb) $R^1 = H$, $M = Mn$ (MANEB)

(IIIc) mixture of (IIIa) and (IIIb) (MANCOZEB)

(IIId) $R^1 = CH_3$, $M = Zn$ (PROPINEB)

and/or
C) benzimidazole derivatives of the formulae

(IVa) 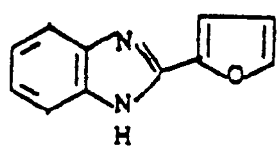 (FUBERIDAZOLE)

(IVb) 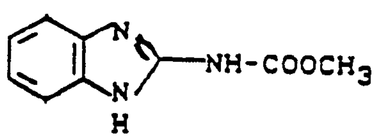 (CARBENDAZIM)

D) a urea derivative of the formula

(V) 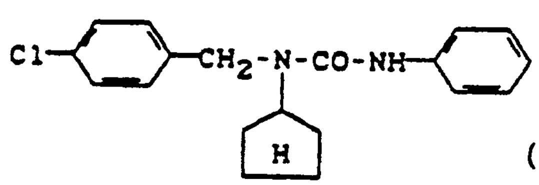 (PENCYCURON)

and/or
E) a triazine derivative of the formula

(VI)

and/or

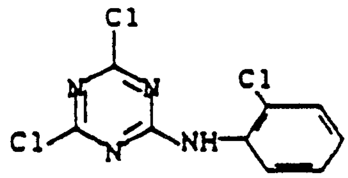

(ANILAZINE)

F) a quinoxaline derivative of the formula

(VII)

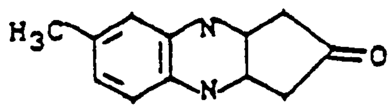

(QUINOMETHIONATE)

and/or
G) a dicarboxiride derivative of the formulae

(VIIIa)

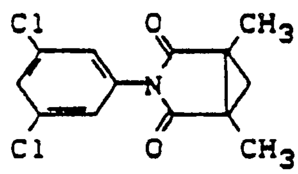

(PROCYMIDONE)

(VIIIb)

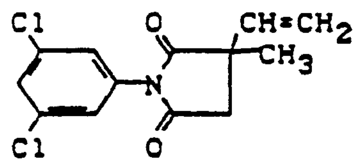

(VINCHLOZOLIN)

(VIIIc)

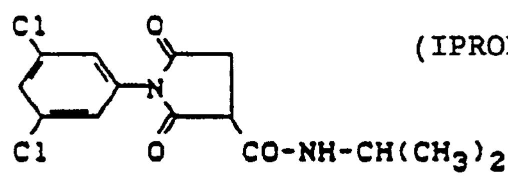

(IPRODIONE)

wherein, in the active compound combination, the weight ratio of substituted 1-hydroxyethyl triazolyl derivative of the formula (I) to an active compound from the groups (A) to (G) is between 1 : 0.1 and 1 : 500.

2. Fungicidal agent according to Claim 1, characterised in that the weight ratio is between 1 :0.2 and 1 :200.

3. Fungicidal agent according to Claim 1, characterised in that the weight ratio is between 1 : 0.5 and 1 : 50.

4. Process for combating fungi, characterised in that an active compound combination according to Claim 1 is allowed to act on fungi or their habitat.

5. Use of active compound combinations according to Claim 1 for combating fungi.

6. Process for the preparation of fungicidal agents, characterised in that an active compound combination according to Claim 1 is mixed with extenders and/or surface-active agents.

**Revendications**

1. Agent fongicide, caractérisé en ce qu'il contient une combinaison d'ingrédients actifs consistant en
— le dérivé substitué de 1-hydroxyéthyl-triazolyle de formule :

(I) 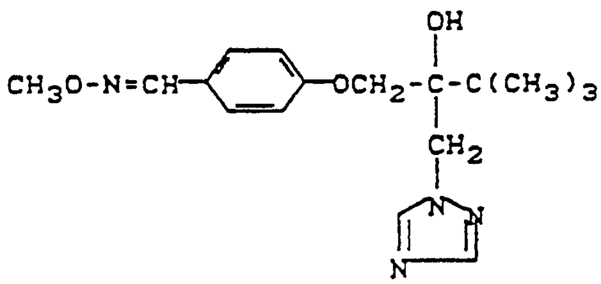

et

A) un dérivé d'acide carboxylique aromatique de formule

(II) 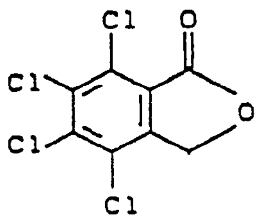 (TETRACHLORPHTHALID)

et/ou

B) des dithiocarbamates de formules

(III) 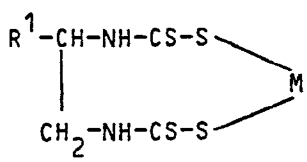

| | | |
|---|---|---|
| (IIIa) | $R^1$ = H, M = Zn | (ZINEB) |
| (IIIb) | $R^1$ = H, M = Mn | (MANEB) |
| (IIIc) mélange de (IIIa) et de (IIIb) | | (MANCOZEB) |
| (IIId) | $R^1$ = $CH_3$, M = Zn | (PROPINEB) |

et/ou

C) des dérivés de benzimidazole de formules

(IVa) 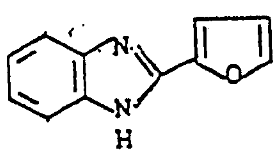 (FUBERIDAZOL)

(IVb) 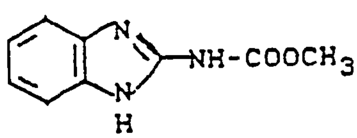 (CARBENDAZIM)

D) un dérivé d'urée de formule

(V) 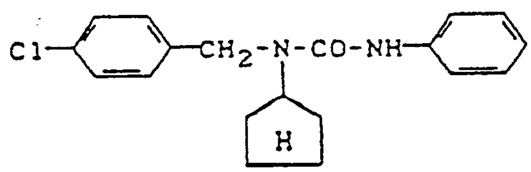 (PENCYCURON)

et/ou

E) un dérivé de triazine de formule

(VI) 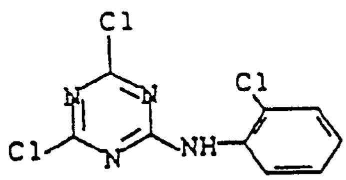 (ANILAZIN)

et/ou

F) un dérivé de quinoxaline de formule

(VII) 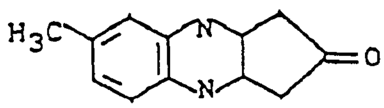 (CHINOMETHIONAT)

et/ou

G) un dérivé de dicarboximide de formules

(VIIIa) 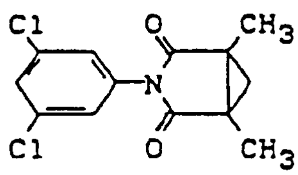 (PROCYMIDONE)

(VIIIb) 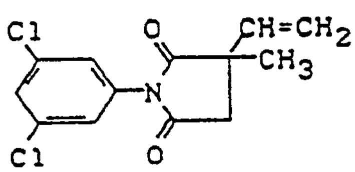 (VINCHLOZOLIN)

(VIIIc) 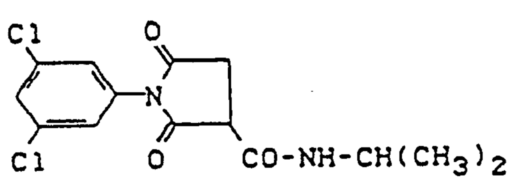 (IPRODIONE)

le rapport pondéral du dérivé substitué de 1-hydroxyéthyl-triazolyle de formule (I) à un ingrédient actif des groupes (A) à (G) dans la combinaison d'ingrédients actifs étant compris entre 1 : 0,1 et 1 : 500.

2. Agent fongicide selon la revendication 1, caractérisé en ce que le rapport pondéral est compris entre 1 :0,2 et 1 : 200.

3. Agent fongicide selon la revendication 1, caractérisé en ce que le rapport pondéral est compris entre

1 :0,5 et 1 : 50.

4. Procédé pour la lutte contre les champignons, caractérisé en ce que l'on fait agir sur les champignons ou leur espace vital une combinaison d'ingrédients actifs selon la revendication 1.

5. Utilisation de combinaisons d'ingrédients actifs selon la revendication 1 pour la lutte contre les champignons.

6. Procédé pour la préparation d'agents fongicides, caractérisé en ce que l'on mélange une combinaison d'ingrédients actifs selon la revendication 1 avec des agents diluants et/ou des agents tensioactifs.